# EUROPEAN PATENT SPECIFICATION

(11) **EP 2 668 419 B1**
(45) Date of publication and mention of the grant of the patent: **12.08.2015**
(21) Application number: 12706288.3
(22) Date of filing: 20.01.2012
(51) Int. Cl.: F16G 11/04, F16G 11/10

(54) **CLAMPING ASSEMBLY**
KLEMMVORRICHTUNG
ENSEMBLE DE SERRAGE

(30) Priority: 26.01.2011 GB 201101283; 16.06.2011 GB 201110126; 17.01.2012 GB 201200681
(43) Date of publication of application: 04.12.2013
(73) Proprietor: Gripple Limited, Sheffield S4 7UQ (GB)
(72) Inventor: SOMERFIELD, Alan, Lincoln LN6 8HZ (GB); GIEMZA Lee Mark, West Yorkshire WF4 3PF (GB)
(86) International application number: PCT/GB2012/000047
(87) International publication number: WO 2012/101396

(56) References cited:
- EP-A2- 0 878 391
- WO-A1-95/30844
- AU-A1- 2010 200 448
- DE-A1-102009 015 288
- US-A- 3 868 748

## Description

This invention relates to clamping assemblies for clamping elongate members. More particularly, but not exclusively, this invention relates to clamping assemblies for clamping flexible elongate members. Embodiments of the invention relate to clamping assemblies for clamping wires, cables, wire ropes and the like.

In order to suspend articles from ceilings flexible elongate members in the form of wires or cables are used. A suitable clamping assembly is clamped on the flexible elongate member, and the article is supported thereby. In a prior clamping assembly, it can be released from the wire and its position adjusted along the elongate member by depressing a collar through which the flexible elongate member extends.

US 3868748 A discloses a tendon gripping and release assembly disclosing all the features of the preamble of claim 1.

DE 102009015288 A1 discloses a holder for fixing an object to a support means. AU 2010200448 A1 discloses a securing device which can secure a restraint.

According to one aspect of this invention, there is provided a clamping assembly comprising a body defining a path to receive an elongate article lengthwise therethrough, a clamping arrangement in the body, the clamping arrangement being arrangeable in a clamping condition to clamp the elongate article, and the clamping assembly further including a release arrangement on the body, wherein the release arrangement is moveable in a direction transverse to the path to release the clamping arrangement from the clamping condition, wherein the clamping arrangement comprises a carriage held within the body and a clamping member carried by the carriage, the carriage including a release portion co-operable with the release arrangement, the release portion comprising a chamfered release surface, and wherein the release arrangement comprises a main part and an engaging element configured to cooperate with the clamping arrangement, the engaging element having a co-operating surface to co-operate with the release surface on the carriage, the co-operating surface being disposed at a corresponding angle to the chamfered release surface.

When the clamping arrangement is released from the clamping condition, the clamping arrangement may move to a non-clamping condition. The clamping arrangement may be movable between the clamping and non-clamping conditions.

The release arrangement may be movable from a non-release condition to release the clamping arrangement from the clamping condition. Desirably, the release arrangement is movable from the non-release condition to a release condition to release the clamping arrangement from the clamping condition. The path may have a longitudinal axis, and the release arrangement may be movable transverse to said longitudinal axis from the non-release condition to the release condition. Desirably, the release arrangement is movable substantially orthogonally to said longitudinal axis.

The clamping member may be moveable between clamping and non-clamping positions.

The clamping member may be pivotally mounted on the body. The clamping member may be pivotally movable between the clamping and non-clamping positions.

The clamping member may have a clamping axis about which the clamping member is pivotally movable. The clamping axis may extend transverse to the path. The clamping axis may extend transverse to the longitudinal axis of the path. The clamping axis may extend substantially orthogonally to the longitudinal axis of the path. The clamping axis may be transverse to the direction of movement of the release arrangement when the release arrangement is moved to release the clamping arrangement.

The clamping member may have a clamping surface for engaging the elongate article. The distance from a point on the clamping surface to the clamping axis may increase around the clamping axis. This provides the advantage in the clamping assembly described herein that, as the clamping member is forced onto the elongate article, the clamping force increases as the clamping member pivots about the clamping axis.

The clamping arrangement may comprise a pivot member through which the clamping axis extends. The clamping member may define a through aperture, and the pivot member may extend through the through aperture. The pivot member may comprise a shaft.

The clamping arrangement may further include urging means to urge the clamping arrangement to the clamping condition. The urging means may be operable on the clamping member to urge the clamping member to the clamping position. Desirably, the urging means engages the clamping member to urge the clamping member to the clamping position.

The clamping arrangement may include a reaction portion configured so that the elongate member can be clamped between the clamping member and the reaction portion. The urging means may urge the clamping member towards the reaction portion.

The reaction portion may comprise a wall. The urging means may comprise a spring, such as a leaf spring.

The body may comprise a first portion in which the clamping member is disposed. The urging means may be disposed in the first portion. The body may include a second portion in which the reaction member is disposed. The path may be disposed between the first and second portions.

The engaging element may engage the clamping member.

The release arrangement may comprise one or more engaging elements. The release arrangement may comprise two engaging elements. The, or each, engaging element may comprise a projection extending from the main part.

The body may define an opening through which the engaging element can extend to cooperate with the clamping assembly. Where the release arrangement comprises two engaging elements, the body may define two openings, a respective opening being defined for each engaging element to cooperate with the clamping assembly. Each of the engaging elements may engage the clamping member.

The, or each, opening may be elongate. The path may have a longitudinal axis and the, or each, opening may extend axially relative to the path. The openings may be defined on opposite sides of the reaction portion.

The main part of the release arrangement may be substantially hemi-cylindrical in shape. The first portion of the body may be substantially hemi-cylindrical in shape. The main part of the release arrangement and the first portion of the body may be connected to one another to provide a substantially cylindrical assembly. The second portion of the body may extend into the main part of the release arrangement when the first portion of the body and the main part of the release arrangement are connected to each other.

The body and the release arrangement may comprise securing formations to secure the release arrangement on the body. The securing formations may comprise a detent member on one of the release arrangement and the body, and a recess to receive the detent member, the recess being defined in the other of the release arrangement and the body. The securing formations may comprise two detent members which may be arranged opposite each other on the body or the release arrangement. The securing formations may include two recesses which may be defined opposite each other on the release means or the body.

The clamping assembly may include a cover to extend over the release arrangement and the body when the release arrangement and the body are connected to each other. The cover may be provided to prevent inadvertent release of the clamping arrangement.

The clamping member may have a clamping portion and a release portion. The release portion may be configured to be engaged by the engaging elements to move the clamping member to the release position. The clamping member may have two release portions on opposite sides of the clamping portion, each release portion being configured to be engaged by a respective one of the engaging elements.

The, or each, release portion may comprise an abutment formation for abutting the release arrangement. The, or each, release portion may include a curved rolling formation, which may be convexly curved.

The curved rolling formation may be configured to co-operate with the release arrangement, to allow the clamping member to pivot by the rolling formation rolling on the release arrangement.

The, or each, engaging element may have a projecting force applying formation, which may engage the clamping member. The, or each, projecting force applying formation may engage the, or each, abutment formation on the clamping member. The, or each, engaging element may include a curved receiving formation to receive the rolling formation of the, or each, release portion on the clamping member. The, or each, receiving formation may be concavely curved.

In a first embodiment, the clamping arrangement may include a plurality of clamping members. The carriage may have a holding portion to hold the, or each, clamping member.

The carriage may define a bore to receive the elongate article. In use, the elongate article may extend through the bore. The carriage may be arranged within the path in the body. Where the carriage defines the bore, the bore may extend along the path and may be coaxial with the path.

The carriage may include a holding formation to hold the clamping member. The holding formation may be an aperture defined in the carriage. Where the clamping arrangement has a plurality of clamping members, the carriage may have a plurality of holding formations to hold the plurality of clamping members. Each holding formation may be an aperture defined in the carriage.

The, or each, clamping member may comprise a spherical member, which may be a ball-bearing.

The body may have a force applying formation to move the, or each, clamping member into engagement with the elongate article. The force applying formation may comprise a cam formation to move the, or each, clamping member into engagement with the elongate article. The force applying formation may comprise a tapered region of the body.

The tapered region may be provided adjacent the path in the body. The tapered region may extend around the path.

The carriage may be moveable between a clamping position, in which the, or each, clamping member can engage the article, and a non-clamping position, in which the, or each, clamping member is released from the article.

When the carriage moves from the non-clamping position to the clamping position, the force applying formation may push the, or each, clamping member into engagement with the article.

The carriage may have a flared portion which is flared outwardly in correspondence with the tapered region of the body. The, or each, holding formation may be provided in the flared portion of the carriage. The flared portion may be the holding portion.

In the first embodiment, the urging means may be operable on the carriage to urge the carriage to the clamping position. The urging means may be a resilient urging means, such as a spring, for example a coil spring, and may be provided coaxially relative to the path in the body. The urging means may be provided within the path.

The carriage may include a release portion, which may be provided on the flared portion. The release portion may include a release surface, which can co-operate with the release arrangement. The release portion may comprise a tubular member, and the release surface may be provided on the tubular member at an end of thereof spaced from the flared portion.

In the first embodiment, the body may define a main recess to receive the release arrangement. The body may define a front aperture to allow the release arrangement to be received in the main recess.

The release arrangement may have a co-operating surface to co-operate with the release surface on the carriage. The co-operating surfaces may be disposed at a corresponding angle to the release surface. The engaging elements of the release arrangement may include the co-operating surface for engaging the release surface on the carriage.

When the release arrangement is moved from the non-release condition to the release condition, the co-operating surface may engage and slide over the release surface on the carriage, thereby moving the carriage from the clamping position to the non-clamping position.

The release surface may be inclined relative to the longitudinal axis of the carriage.

The release surface and the co-operating surface may be in the form of corresponding cam surfaces to effect the aforesaid movement of the carriage when the co-operating surface on the release arrangement slides over the release surface on the carriage.

The release arrangement may include a release projection, and the co-operating surface may be provided on the release projection.

In the first embodiment, the clamping arrangement may be movable to a third condition. When the clamping arrangement is in the third condition, the carriage may be in a third position.

The carriage may be moveable from the clamping position in a direction away from the non-clamping position to the third position. The carriage may be movable to the third position only when an elongate article does not extend through the bore

In the third position, the release projection may engage the tubular member when the release arrangement is moved from the non-release condition, thereby preventing movement of the carriage by preventing the co-operating surface on the release projection from engaging and sliding over the release surface on the carriage.

The release arrangement may include wall members, which may extend opposite each other around the carriage. In the first embodiment, the wall members may include a detent to engage a corresponding formation on the body.

In a second embodiment, the release arrangement may include a collar extending around the carriage. The collar may comprise a curved wall formation and the wall members. The curved wall formation may extend between the wall members. The collar may include the main part of the release arrangement. The curved wall formation, the wall members and the main part may together define a space to receive the carriage.

In the second embodiment, the body may define a subsidiary recess extending from the main recess. The subsidiary recess may be configured to receive the collar. The subsidiary recess may be configured to receive the wall members and the curved wall formation.

Reference is now made to the accompanying drawings, in which:
Figure 1 is a perspective side view of a clamping assembly with a release arrangement in a non-release condition;
Figure 2 is a view similar to Figure 1 showing the release arrangement in a release condition;
Figure 3A is a side perspective view of a body forming part of the clamping assembly;
Figure 3B is a front view of the body shown in Figure 3A;
Figure 4 is a side perspective view of a release arrangement forming part of the clamping assembly;
Figure 5 is a sectional side view of a clamping assembly with a clamping arrangement in a clamping condition, and the release arrangement in a non-release arrangement;
Figure 6 is a sectional side view, similar to Figure 5, but showing the clamping arrangement in a non-clamping condition, and the release arrangement in a release condition;
Figure 7 is a view along the line VII - VII in Figure 5;
Figure 8 is a view along the lines VIII - VIII in Figure 6;
Figure 9 is a side view of the clamping assembly, but with the body omitted;
Figure 10 is a perspective view of a clamping member;
Figure 11 is a perspective view of the clamping assembly, with a cover mounted on the body and the release arrangement;
Figure 12 is a perspective side view of a clamping assembly, being a first embodiment of the invention;
Figure 13 shows a body forming part of the clamping assembly shown in Figure 12;
Figure 14 shows a carriage forming part of the clamping assembly shown in Figure 12;
Figure 15 is a front perspective view of a release arrangement forming part of the clamping assembly shown in Figure 12;
Figure 16 is a rear perspective view of the release arrangement shown in Figure 15;
Figure 17A is a perspective sectional view of the clamping assembly shown in Figure 12, with the clamping arrangement in a clamping condition;
Figure 17B is a sectional side view of the clamping assembly shown in Figure 12, with the clamping arrangement in the clamping condition;
Figure 18A is a perspective sectional view of the clamping assembly shown in Figure 12, with the clamping arrangement in a non-clamping condition;
Figure 18B is a sectional side view of the clamping assembly shown in Figure 12, with the clamping arrangement in the non-clamping condition;
Figure 19A is a perspective sectional view of the clamping assembly shown in Figure 12, with the clamping arrangement in a third condition;
Figure 19B is a sectional side view of the clamping assembly shown in Figure 12, with the clamping arrangement in the third condition;
Figure 20 is a front view of a body forming part of another clamping assembly, being a second embodiment of the invention;
Figure 21 is a perspective view of a release arrangement and a carriage for use in the second embodiment of the clamping assembly;
Figure 22 is a sectional view through the release arrangement and the carriage shown in Figure 21;
Figure 23 is a sectional view of the second embodiment of the clamping assembly in a non-clamping position; and
Figure 24 is a sectional view of the second embodiment of the clamping assembly in a clamping position.

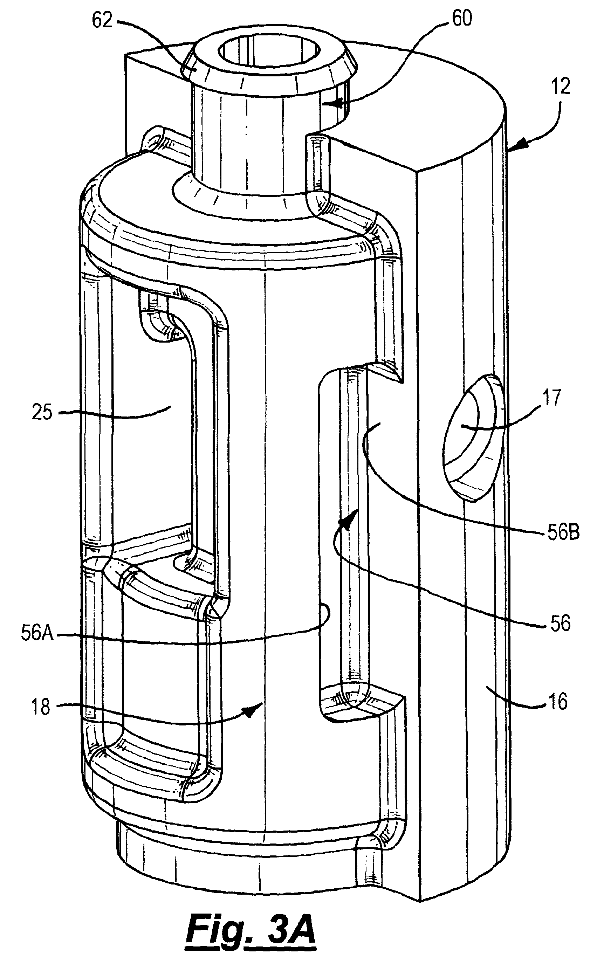

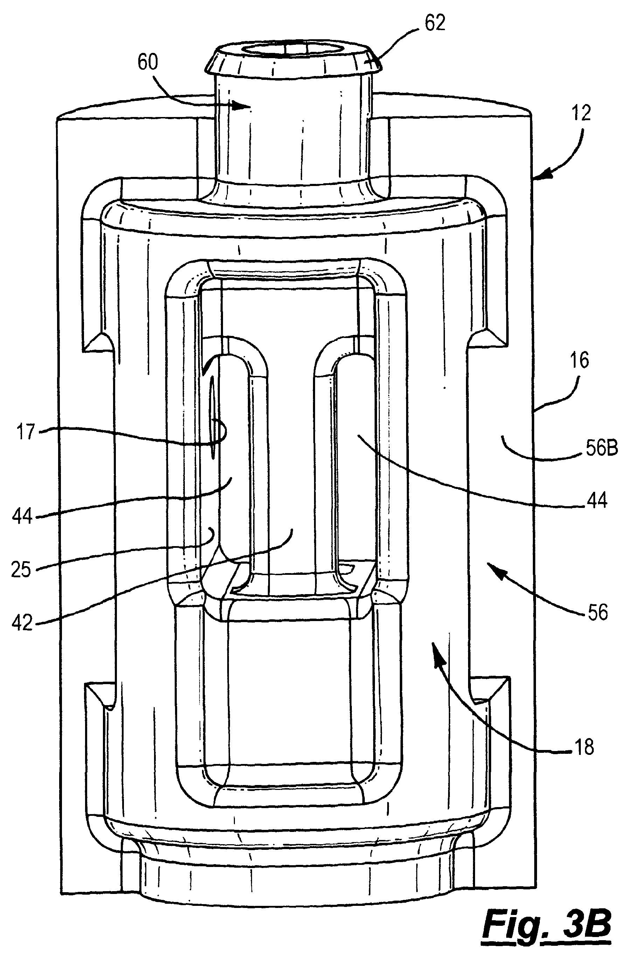

Referring to the drawings, there is shown a clamping assembly 10 comprising a body 12 and a release arrangement 14. The body 12 (see particularly Figure 3) includes a hemi-cylindrical first portion 16 and a hemi-cylindrical second portion 18 provided on the first portion 16 and projecting therefrom. The hemi-cylindrical second portion 18 is smaller than the first portion 16.

The first portion 16 defines two opposed apertures 17, which are aligned with each other. The apertures 17 are arranged to receive and hold a pivot member on which a clamping member is pivotally mounted, as explained below.

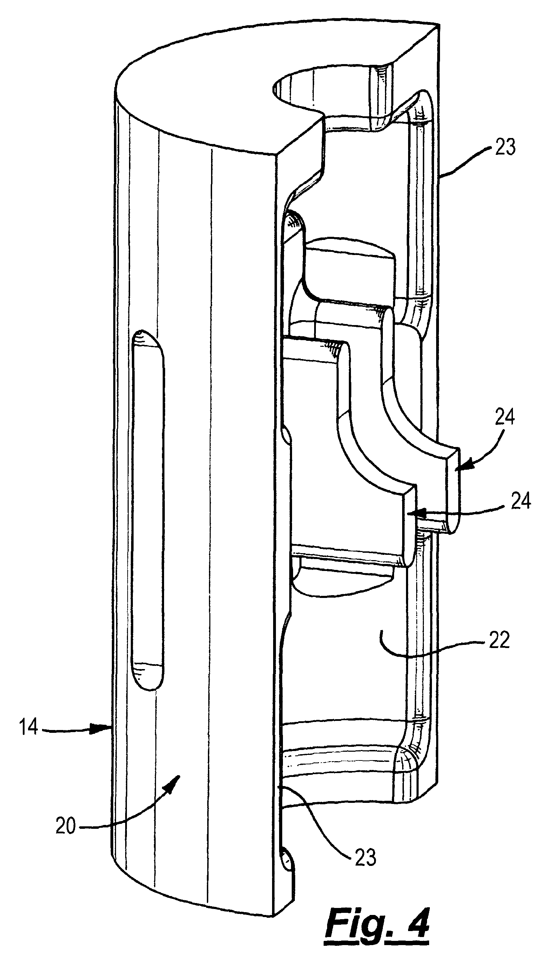

The release arrangement 14 comprises a hemi-cylindrical main part 20 (see particularly Figure 4) having opposed parallel edges 23 and defining a generally hemi-cylindrical recess 22 to receive the second portion 18 of the body 12. The release arrangement 14 further includes two engaging elements 24 which project from the recess 22 beyond the edges 23. The second portion 18 defines a cavity 25 into which the engaging elements 24 can be received, as explained below.

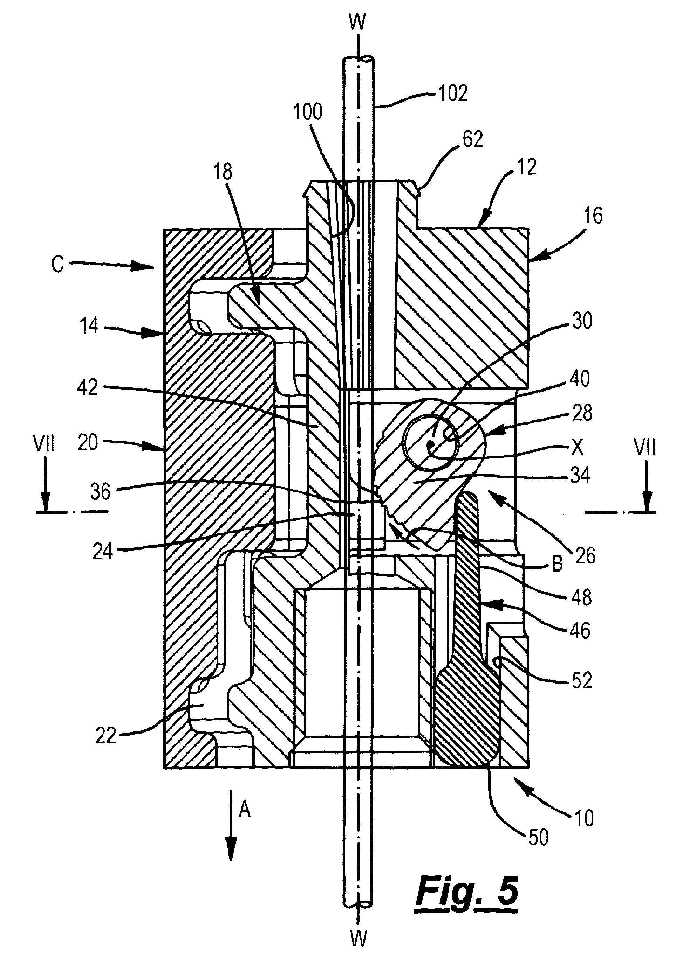

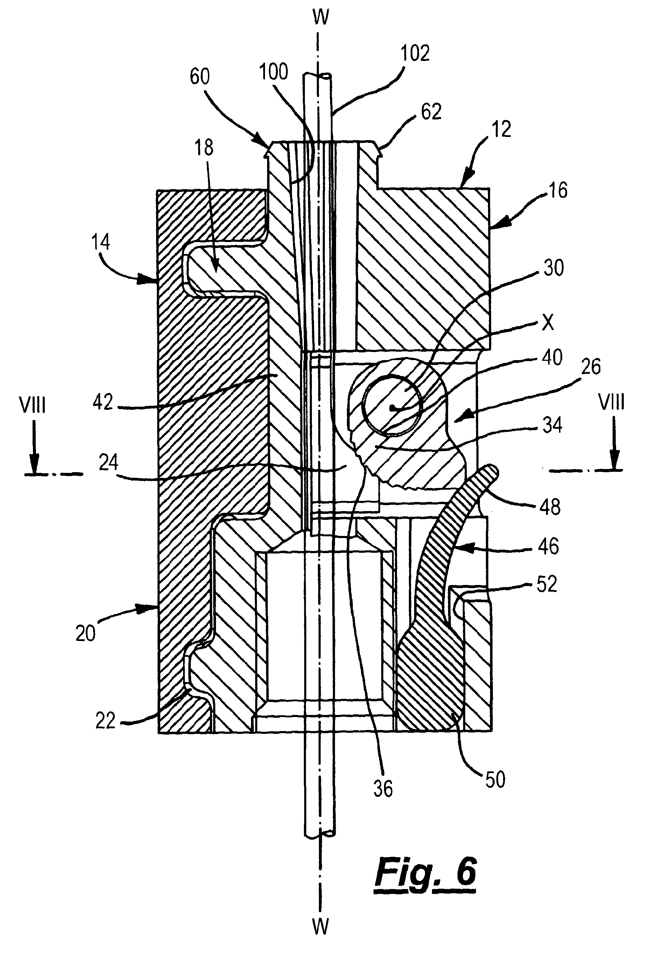

Referring to Figures 5 and 6, the body 16 defines a path 100 for an elongate article 102, in the form of a rod, wire, cable or the like. The path 100 has a longitudinal main axis W. The path 100 is defined between the first and second portions 16, 18 and runs through them.

The clamping assembly 10 further includes a clamping arrangement 26 provided in the body 12. The clamping arrangement 26 comprises a clamping member 28 pivotally mounted on a pivot member in the form of a shaft 30 within the first portion 16 of the body 12.

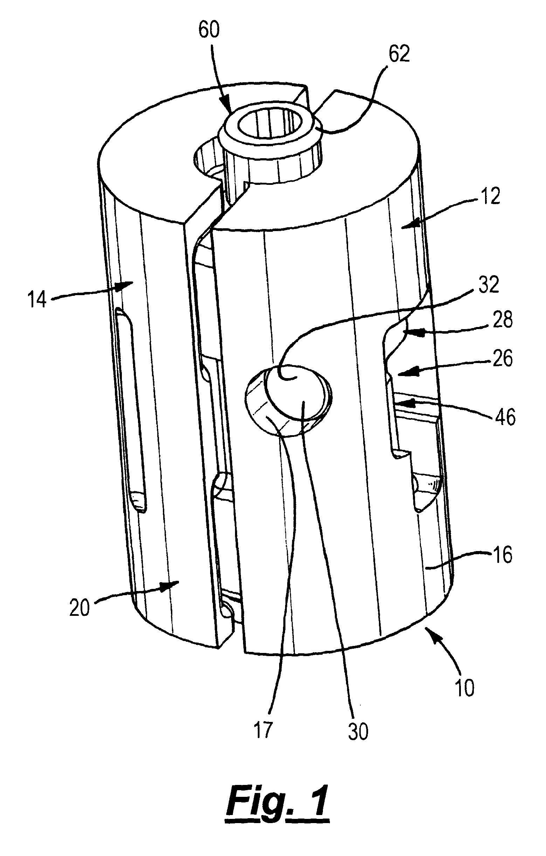

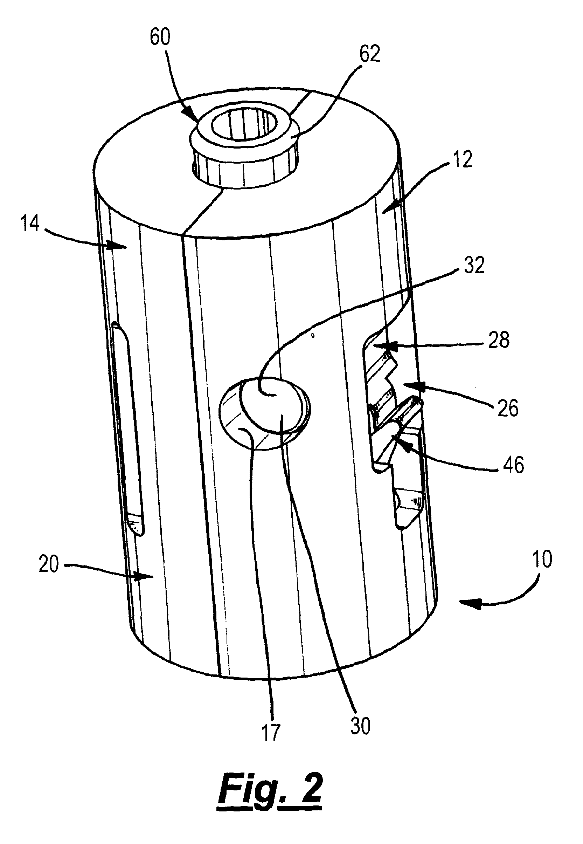

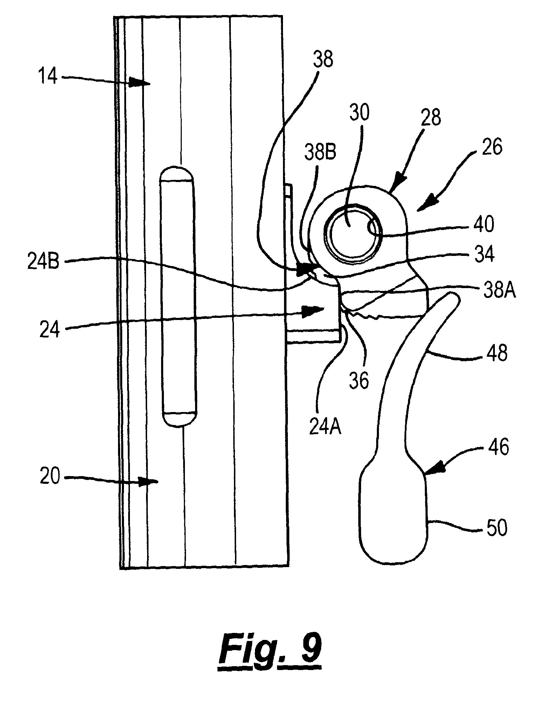

The clamping arrangement 26 can be moved between a clamping condition shown in Figures 1, 5 and 7 and a non-clamping condition shown in Figures 2, 6, 8 and 9.

The release arrangement 14 can be moved relative to the body 12 between two conditions, namely a non-release condition, shown in Figures 1, 5 and 7 and a release condition, shown in Figures 2, 6, 8 and 9. When the release arrangement 14 is in the non-release condition, the clamping arrangement 26 is in the clamping condition. When the release arrangement 14 is in the release condition, the release arrangement 26 co-operates with the clamping arrangement 26 to move the clamping arrangement 26 to the non-clamping condition.

The clamping member 28 is movable between a clamping position, shown most clearly in Figure 5, in which the clamping member 28 can clamp the elongate article 102 in the path 100, and a non-clamping position, in which the clamping member 28 is released from the elongate article 102. When the clamping arrangement 26 is in the clamping condition, the clamping member 28 is in the clamping position. When the clamping arrangement 36 is in the non-clamping condition, the clamping member is in the non-clamping position.

The clamping member 28 defines a through aperture 40, through which the shaft 30 extends. The shaft 30 has opposite end regions 32, which are received in the opposed apertures 17 defined in the first portion 16 of the body 12.

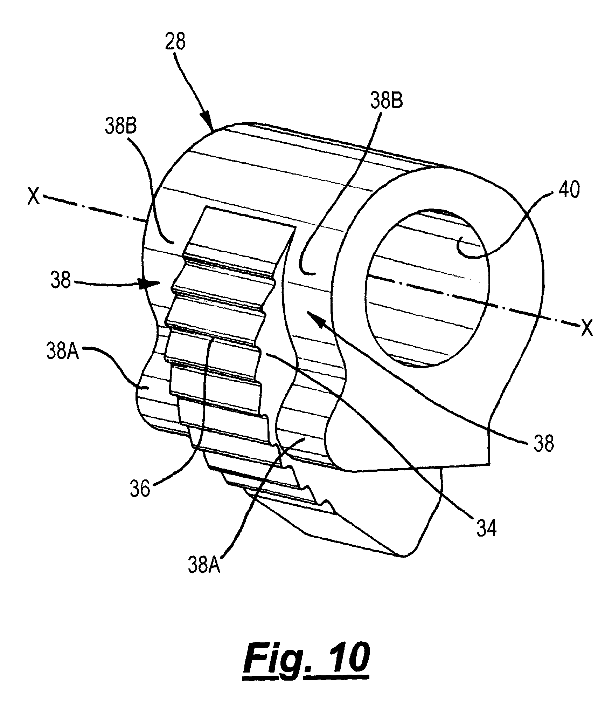

Referring to Figure 10, the clamping member 28 includes a clamping portion 34, having a serrated clamping surface 36, and two release portions 38 on opposite sides of the clamping portion 34. The release portions 38 are engageable by the engagement elements 24 to release the clamping member 28 from a clamping position, as explained in more detail below.

The clamping member 28 has a clamping axis X about which the clamping member 28 can pivot. The clamping axis X extends orthogonally to the longitudinal main axis W of the path 100.

The clamping surface 36 extends non-symmetrically around the clamping axis X, such that the distance from a point on the clamping surface 36 to the clamping axis X increases around the clamping axis X.

Each release portion 38 has an abutment formation 38A and a curved rolling formation 38B. Each of the engaging elements 24 has a projecting force applying formation 24A to engage a respective one of the abutment formations 38A. Each engaging element 24 also has a concavely curved receiving formation 24B to receive a respective one of the curved rolling formations 38B, when the engaging elements 24 push the clamping member to a non-clamping position, as explained below.

The second portion 18 of the body 12 has a reaction member 42 against which the elongate article 102 can be clamped by the clamping member 28. The reaction member 42 can be most clearly seen in Figure 3B. The reaction member 42 is in the form of an elongate wall section of the second portion 18 of the body 12. Two elongate openings 44 are defined in the second portion 18, each being on a respective opposite side of the reaction member 42. Each of the engaging elements extends through a respective one of the openings 44 to engage the release portions 38 of the clamping member 28.

Urging means in the form of a leaf spring 46 is mounted in the first portion 16 of the body 12. The leaf spring 46 engages the clamping member 28 and urges the clamping member 28 to the clamping position. This is shown most clearly in Figure 5.

The leaf spring 46 comprises a resilient spring portion 48 and an enlarged mounting portion 50 for mounting the leaf spring 46 in the first portion 16 of the body 12. As shown in Figures 5 and 6, the first portion 16 of the body 12 defines a mounting cavity 52 in which the mounting portion 50 of the leaf spring 46 is frictionally mounted.

In use, when an elongate article 102 is received lengthwise through the path 100, the leaf spring 46 urges the clamping member 28 to the clamping position into engagement with the elongate article 102. By pulling downwardly on the clamping assembly 10, as shown by the arrow A in Figure 5, the clamping member 28 pivots about the pivot member 30, thereby pivoting in the direction shown by the arrow B in Figure 5, and increasing the clamping force on the elongate article 102.

The clamping member 28 pivots in the direction indicated by the arrow B until the force applied by the clamping member 28 on the elongate article 102 is sufficient to prevent further relative movement of the clamping assembly 10 in the direction of the arrow A. In this position, the elongate article 102 is securely clamped against the reaction member 42 by the clamping member 28.

The release arrangement 14 is secured to the body 12 by securing formations in the form of two detent members 54 opposite each other on the main part 20, and two recesses 56 defined opposite each other in the first portion 16 of the body 12. Each recess 56 has a front wall 56A and a rear wall 568.

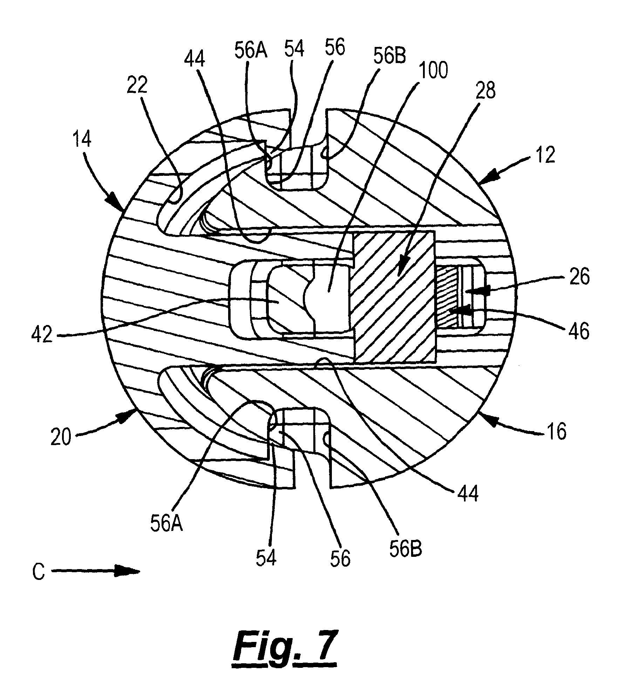

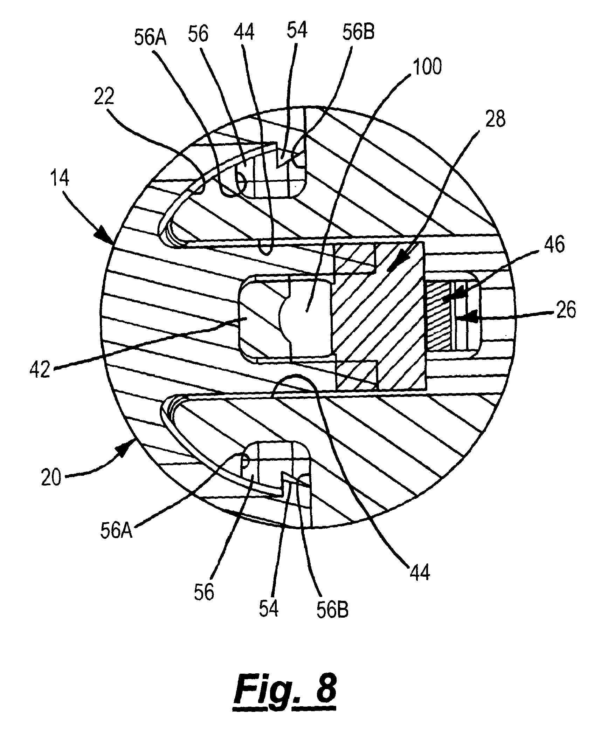

As shown in Figure 7, when the release arrangement 14 is in the non-release condition, the detent members 54 engage the front walls 56A of the recesses 56. When the release arrangement 14 is in the release condition, shown in Figure 8, the detent members 54 are pushed away from the front wall 56A and engage the rear walls 56B of the recesses 56.

In order to release the clamping member 28 from the elongate article 102, the release arrangement 14 is pushed by a user in the direction transverse to the longitudinal axis W of the path 100, as indicated by the arrow C in Figures 5 and 7. The projecting force applying formations 24A of the engaging elements 24 engage the abutment formations 38A of the clamping member 28 and push the clamping member 28 to a release position, shown in Figures 6, 8 and 9, thereby deforming the leaf spring 46, and allowing the curved rolling formations 38B to roll across the receiving formations 24B, This releases the elongate article 102 from the clamping arrangement 26, and allows the position of the clamping assembly 10 on the elongate article 102 to be adjusted along the length of the elongate article 102. When the adjustment is complete, the user lets go of the release arrangement 14. The leaf spring 46 urges the clamping member 28 back to the clamping position in which the clamping member 28 is in clamping engagement with the elongate article 102.

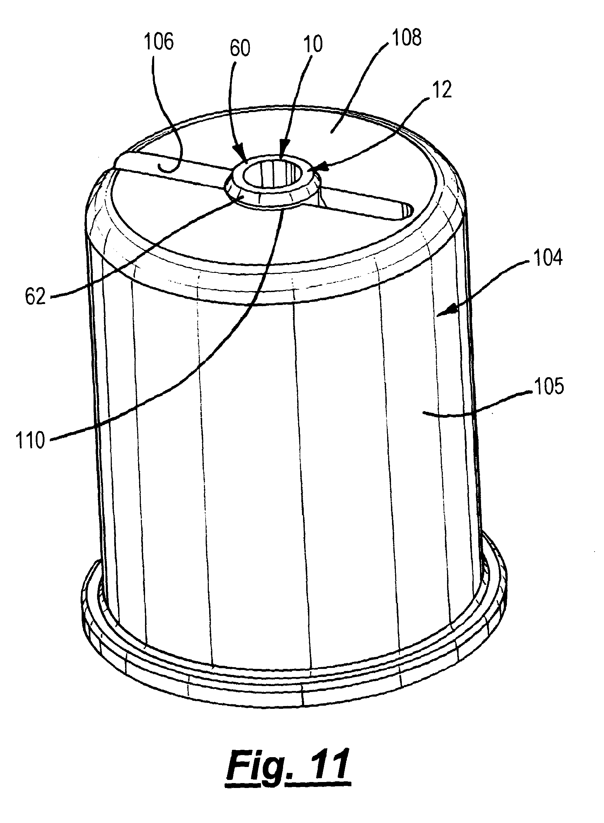

Referring to Figure 11, the clamping assembly 10 includes a cover 104, which can be mounted over the body 12 and the release arrangement 14, thereby preventing inadvertent release of the clamping member 28 and providing a more aesthetic finish to the clamping assembly 10. The cover 104 has a side portion 105 and an upper face 108. A slot 106 is defined across the upper face 108 and down the whole length of the side portion 105. Midway across the upper face 108, the slot widens to a substantially circular aperture 110.

The substantially circular aperture 110 allows the cover to be disposed on the body 12 and the release arrangement 14, after an elongate article has been clamped by the clamping arrangement 26. The body 12 has an annular projection 60, aligned with the path 100, and through which the elongate article 102 can extend. The annular projection 60 has an annular detent formation 62. The projection 60 can be received through the circular aperture 110, and the detent formation is a snap fit over the upper face 108 to secure the cover 104 to the body 12.

Various modifications can be made without departing from the scope of the invention. For example, the main body and the release arrangement could have a square or rectangular configuration.

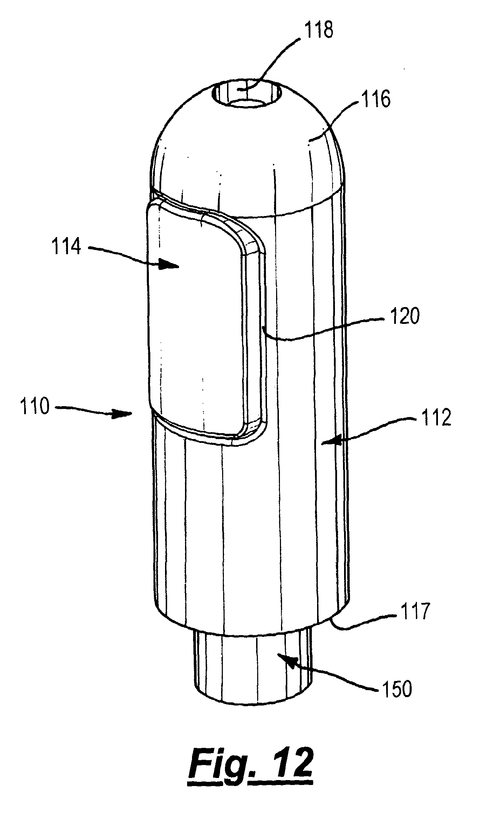

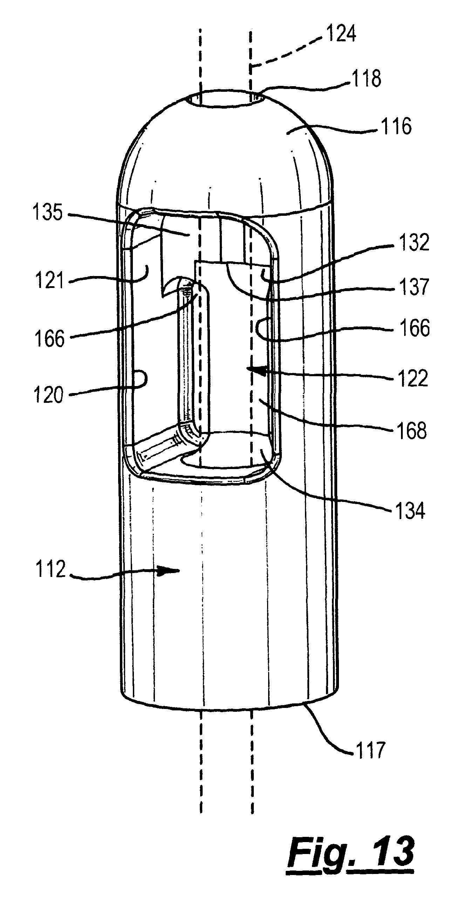

Figures 12 to 18 show a first embodiment of a clamping assembly, according to the present invention, generally designated 110. The clamping assembly 110 comprises a body 112 and a release arrangement 114. The body 112 is generally cylindrical in shape, having a domed upper end region 116, defining an opening 118, through which the elongate article 124 can be received, as explained below. The body 112 has a generally planar lower end 117 having an opening 119.

The body 112 further defines a front aperture 120 in which the release arrangement 114 is held.

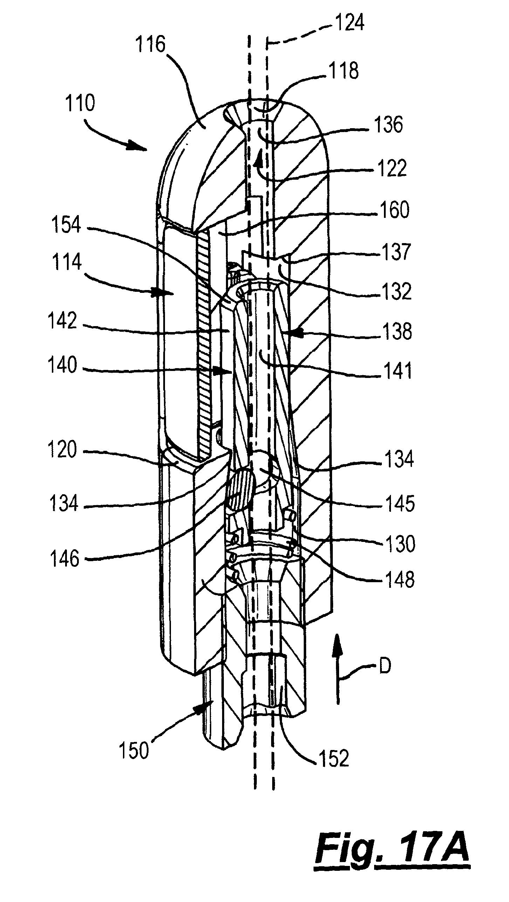

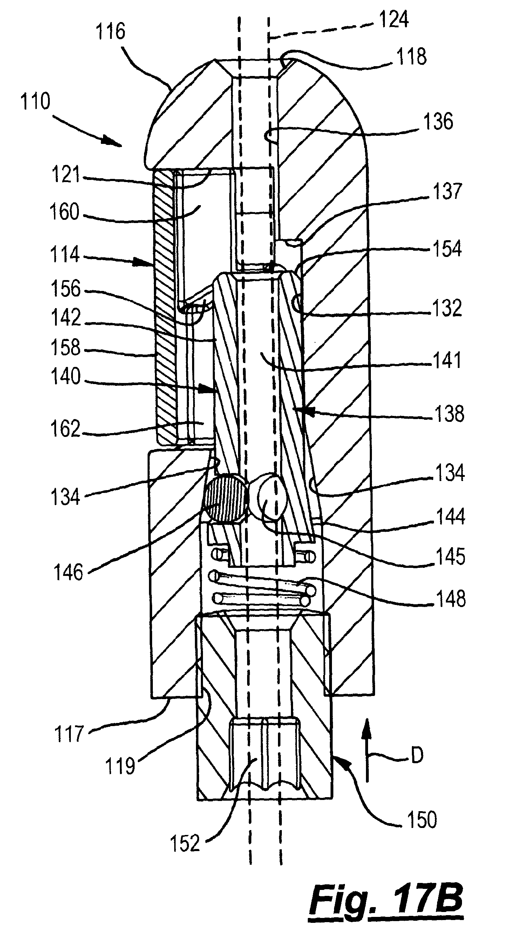

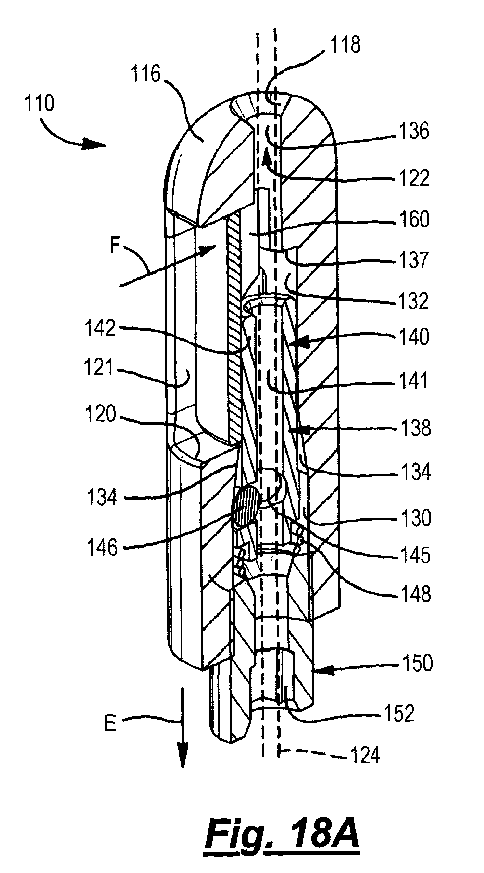

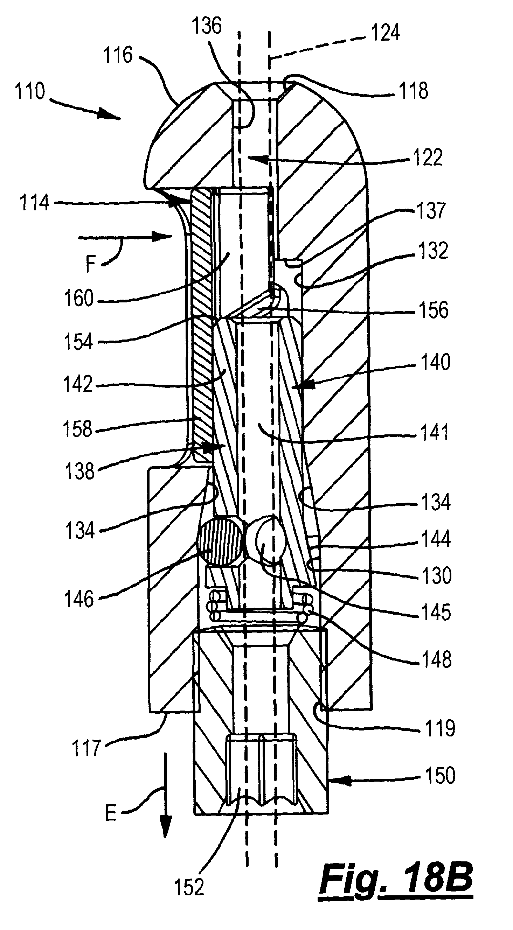

Inside the body 112 (see Figures 17A, 17B, 18A and 18B) there is defined main recess 121 for the release arrangement 114. The front aperture 120 allows the release arrangement 114 to be inserted into the main recess 121.

The body 112 further defines a path 122 for the elongate article 124, which may be in the form of a rod, wire, cable or the like. The path 122 has a longitudinal main axis along which the elongate article 124 extends. The elongate article extends from the path 122 out of the opening 118 in the upper end region 116 of the body 112, and out of the opening 119 in the lower end 117.

The path 122 comprises a first path section 130, a second path section 132, an intermediate section 135 and a third path section 136. The first path section 130 extends from the opening 119 to an inner tapered region 134. The second path section 132 extends from the inner tapered region 134 to the intermediate section 135, and the intermediate section extends from the second path section 132 to the third path section 136. The first path section 130 has a diameter which is greater than the diameter of the second path section 132.

The intermediate section 135 is in the form of a rear wall extending across the main recess 121. In the drawings, the intermediate section 135 is shown above the second path section 132.

The inner tapered region 134 extends between the first and second path sections 130, 132. The inner tapered region 134 is generally frustoconical in shape, and tapers inwardly from the first path section 130 to the second path section 132.

The third path section 136 extends from the intermediate section 135 to the opening 118 in the domed upper end region 116. The second path section 132 has a diameter which is greater than the diameter of the third path section 136. A shoulder 137 extends from the second path section 132 to the intermediate section 135.

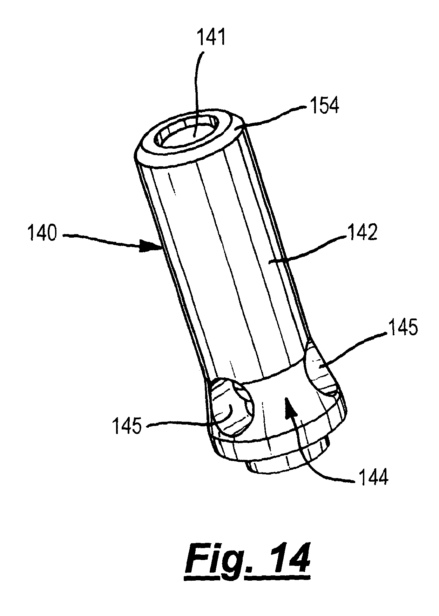

A clamping arrangement 138 is provided within the path 122. The clamping arrangement 138 is in the form of an elongate carriage 140 (see Figures 14, 17A, 17B, 18A and 18B) and clamping members 146 held by the carriage 140. The carriage 140 is moveable lengthwise along the path 122 and defines a bore 141 therethrough. The elongate article 124 extends through the bore 141 in the carriage 140.

The carriage 140 has a release portion in the form of a tubular member 142 and a flared portion 144 on the tubular member 142. The tubular member 142 is substantially cylindrical in configuration. The flared portion 144 tapers outwardly from the tubular member 142 at an angle which is substantially the same as the angle at which the tapered region 134 tapers relative to the first path section 130. The bore 141 extends through the tubular member 142 and through the flared portion 144.

The flared portion 144 has a plurality of holding formations in the form of apertures 145 defined therein. Each of the apertures 145 holds a respective one of the clamping members 146, each of which is in the form of a spherical ball, such as a ball bearing.

The clamping arrangement 138 is movable between clamping and non-clamping conditions. When the clamping arrangement 138 is in the clamping condition, the carriage 140 is in a clamping position shown in Figures 17A and 17B. When the clamping arrangement 138 is in the non-clamping condition, the carriage 140 is in a non-clamping position shown in Figures 18A and 18B.

In the clamping position, the clamping members 146 engage the elongate article 124, thereby holding the elongate article 124 securely in place. In the non-clamping position, the clamping members 146 are released from the elongate article, thereby allowing the elongate article to be moved longitudinally relative to the clamping assembly 110.

The clamping members 146 are movable within the apertures 145 between an article engaging position shown in Figures 17A and 17B and an article release position shown in Figures 18A and 18B. When the carriage is moved in the direction indicated by the arrow D in Figures 17A and 17B, the flared portion 144 of the carriage 140 is moved upwardly into alignment with the tapered region 134 so that the tapered region 134 engages the clamping members 146 and pushes them into engagement with the elongate article 124, thereby clamping the elongate article.

When the carriage 140 is moved in the direction indicated by the arrow E in Figures 18A and 18B, the flared portion 144 of the carriage 140 is moved downwardly out of alignment with the tapered region 134 so that the tapered region 134 no longer engages the clamping members 146, thereby releasing the clamping members 146 from the elongate article to allow the elongate article to be moved longitudinally relative to the clamping assembly 110.

The carriage 140 is pushed in the direction indicated by the arrow E by the action thereon of the release arrangement 114, as described below. Urging means in the form of a coil spring 148 is provided beneath the carriage 140 and urges the carriage 140 upwards in the direction indicated by the arrow D towards the clamping position.

An end member 150 is threadably received at the lower end region of the body 112. The spring 148 is disposed between the end member 150 and the carriage 140. The end member 150 defines a through passage 152 through which the elongate article 124 can extend.

At the free end of the tubular portion of the carriage 140 there is provided a chamfered frustoconical release surface 154 which can co-operate with a pair of corresponding co-operating surfaces 156 on the release arrangement 114. When the release arrangement 114 is pushed inwardly of the body 112 in the direction indicated by the arrow F in Figures 18A and 18B, the co-operating surfaces 156 engage and slide over the chamfered release surface 154 on the carriage 140 thereby pushing the carriage towards the non-clamping position. This releases the clamping members 146 from the elongate article 124.

The release arrangement 114 is in the form of a button having a main part 158 and a pair of release projections 160 extending from the main part 158. Each of the release projections 160 has a respective one of the co-operating surfaces 156 facing downwardly thereon.

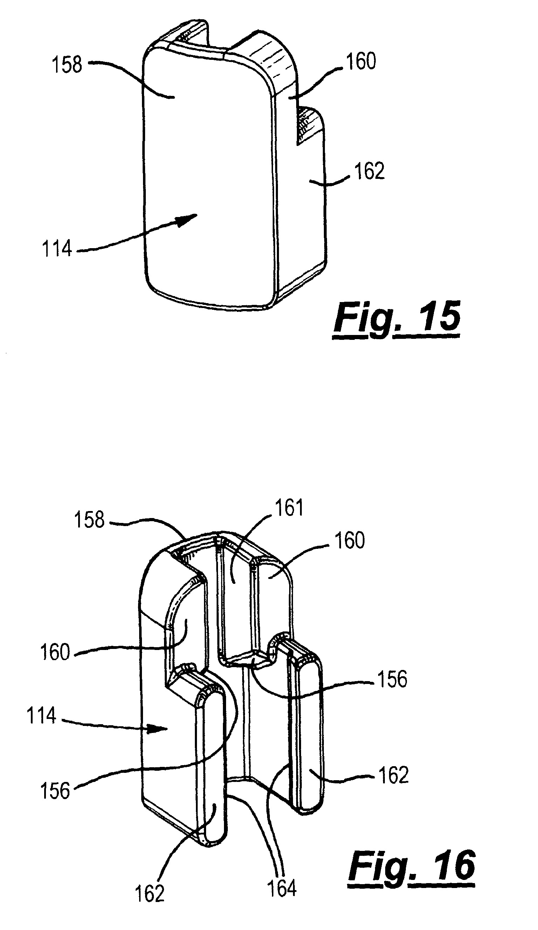

As can be seen from Figure 16, a space 161 is defined between the release projections 160 into which the elongate article 124 can be received when the release arrangement 114 is pressed inwardly in the direction indicated by the arrow F. Thus, the two co-operating surfaces 156 engage the chamfered release surface 154 with the elongate article 124 therebetween. As a result, the two co-operating surfaces 156 push symmetrically on the carriage 140 thereby moving it from its clamping position in the direction indicated by the arrow E in Figures 18A and 18B.

Thus, by pushing the release arrangement 114 inwardly of the body 112, as indicated by the arrow F in Figures 18A and 18B, the carriage 140 is pushed from its clamping position to its non-clamping position. This has the effect of releasing the elongate article 124 so that the elongate article 124 and the clamping assembly 110 can be moved relative to each other.

In order to secure the release arrangement 114 to the body 112, a pair of wall members 162 are provided on the main part 158, and extend from the main part 158 to a region beyond the release projections 160. Each of the wall members 162 has a detent 164. The wall members 162 are received within apertures 166 defined inside the body 112. The apertures 166 are defined on opposite sides of a central member 168. When the wall members 162 are received by the apertures 166, the detents 164 snap around behind the central member 168. This prevents inadvertent removal of the release arrangement 114 from the body 112.

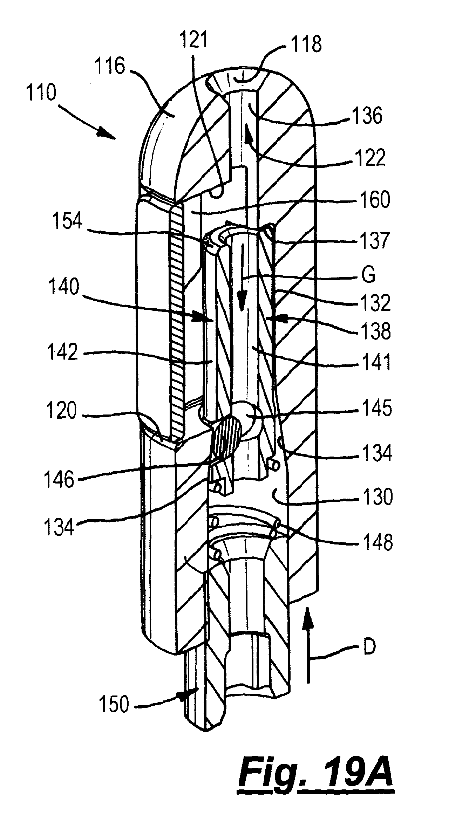

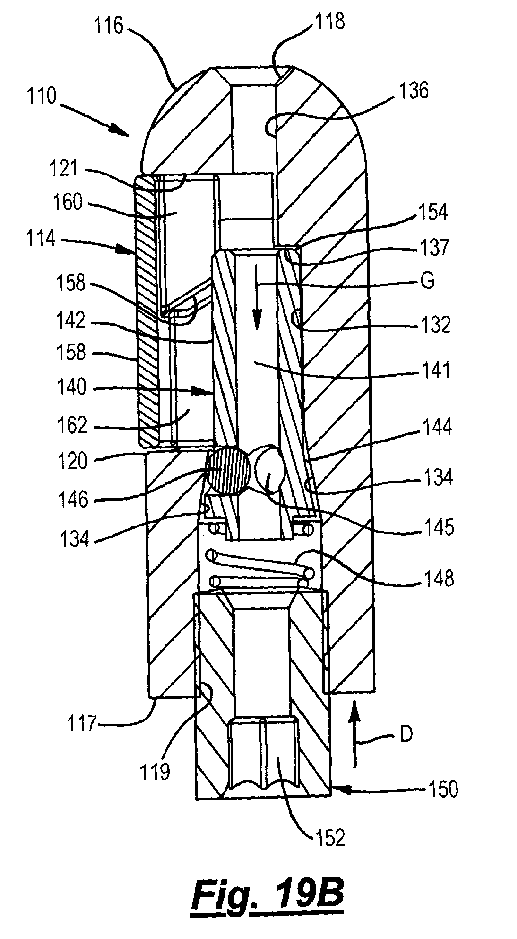

Figures 19A and 19B show the carriage 140 in a third position. As can be seen by comparing Figures 19A and 19B with Figures 17A, 17B, 18A and 18B, the third position of the carriage 140 spaced from the clamping position in the opposite direction to the non-clamping position, with the clamping position being between the non-clamping position and the third position. When there is no elongate article extending through the bore 141, the carriage 140 is urged by the spring 148 in the direction indicated by the arrow D from the clamping position shown in Figures 17A and 17B away from the non-clamping position to the third position.

In the third position, the chamfered release surface 154 is no longer aligned with the co-operating surfaces 156 on the release projections 160. Instead, the release projections 160 are aligned with the tubular member 142. Thus, when an attempt is made to push the release arrangement 114 in the direction indicated by the arrow F (see Figures 18A and 18B), the release projections 160 engage the tubular member 142, and movement of the release arrangement 114 in that direction is blocked. Thus, when the carriage 140 is in the third position, the carriage 140 cannot be moved by the release arrangement 114 to either the clamping or the non-clamping positions. The carriage 140 can be moved from the third position only by the insertion of an elongate article 124 into the bore 141 in the direction of the arrow G to engage the clamping members 146. Further insertion of the elongate article 124 pushes the clamping members 146 and, hence, the carriage 140 in the direction of the arrow G, until the carriage 140 reaches the non-clamping position shown in Figures 18A and 18B.

When the carriage 140 reaches the non-clamping position, the clamping members 146 move outwardly away from the elongate article 124 to allow the elongate article 124 to move relative to the clamping assembly 110,

When the elongate article has been threaded through the clamping assembly 110 to the desired position, the carriage 140 can then be moved to its clamping position to clamp the elongate article in the manner as described above.

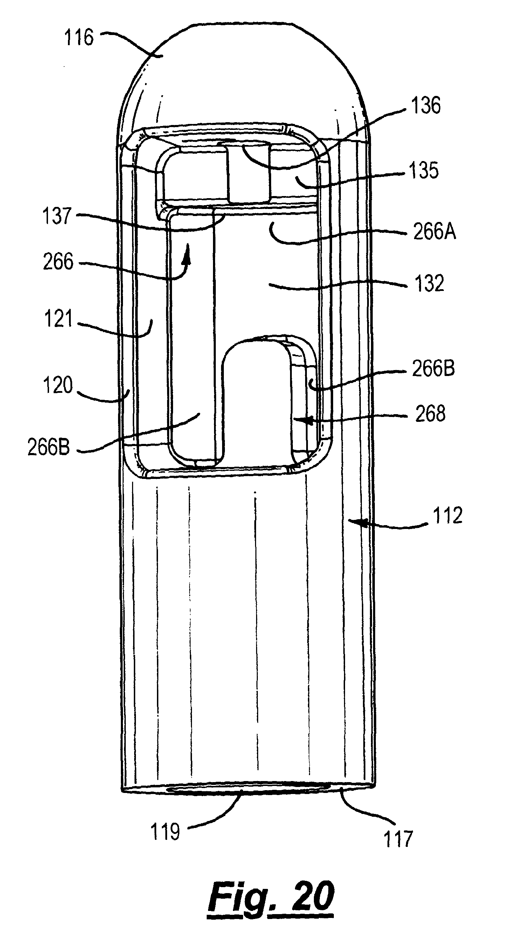

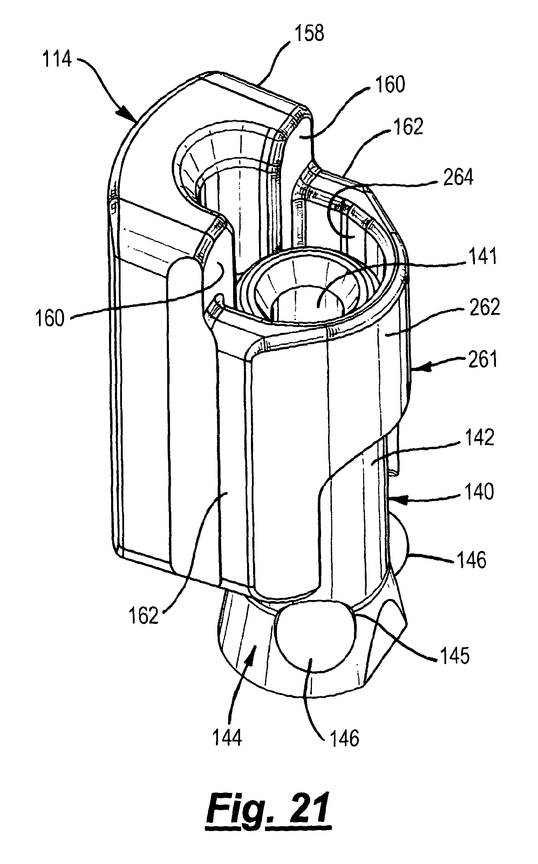

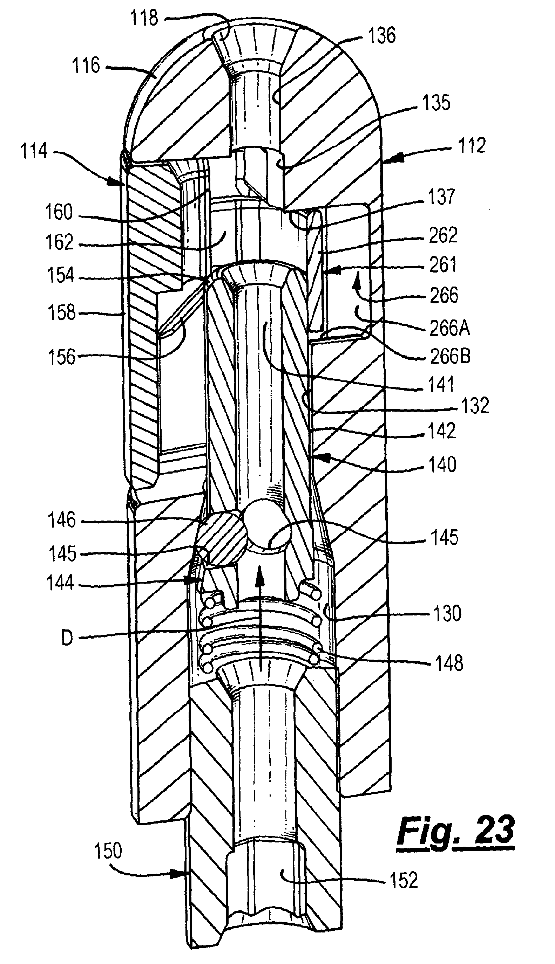

Figures 20 to 24 show a second embodiment of the present invention, similar to the first embodiment, and having many of the same features as the first embodiment. The features of the second embodiment that are the same as those of the first embodiment are designated in Figures 20 to 24 with the same reference numerals as in Figures 12 to 19B.

The second embodiment differs from the first embodiment, in that the wall members 162 of the release arrangement 114 are devoid of the detents 164. Instead, the release arrangement 114 has a collar 261, which comprises the wall members 162, the main part 158 and a convexly curved wall formation 262. The wall members 162 are connected to each other by the convexly curved wall formation 262.

The main part 158, the wall members 162 and the curved wall formation 262 together define a space 264 in which the carriage 140 can be received. In use, the collar 261 extends around the carriage 140, so that the carriage 140 is surrounded by the main part 158, the wall members 162 and the curved wall formation 262. In the drawings, the curved wall formation 262 is shown extending from an upper region of the wall members 162.

In order to accommodate the wall members 162 and the curved wall formation 262, the body 112 defines an internal subsidiary recess 266 opposite the front aperture 120. the recess 266 extends a point substantially mid way along the second path 132. In the drawings, the subsidiary recess 266 is shown defined at an upper region of the second path section 132.

Referring to Figure 20, it can be seen that the main body 112 has an internal projecting portion 268 extending forwardly into the subsidiary recess 266. The subsidiary recess 266 has a main region 266A, which extends from the shoulder 137 to the projecting portion 268 to receive the curved wall formation 262.

The main region 266A of the subsidiary recess 266 can also receive the regions of the wall members 162 to which the curved wall formation 262 is attached, which in the drawings are shown as upper regions of the wall members 162.

The subsidiary recess 266 has two extension regions 268B, which extend on opposite sides of the projecting portion 268. The extension regions 268B can receive the regions of the wall members 162 to which the curved wall formation 262 is not attached, which in the drawings are shown as lower regions of the wall members 162.

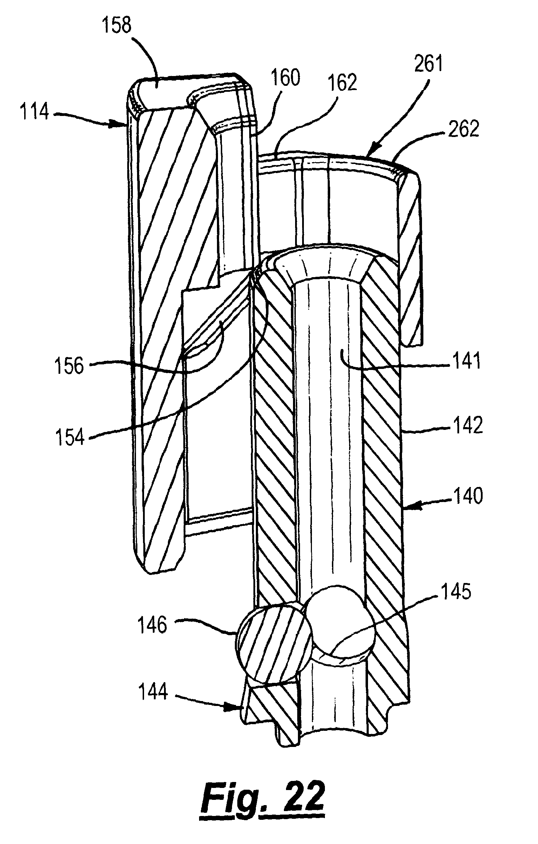

As can be seen from Figures 22, 23 and 24, the release arrangement 114 includes the co-operating surfaces 156 to engage the frustoconical release surfaces 154 on the carriage 140. Thus, the operation of the second embodiment shown in Figures 20 to 24 is the same as the operation of the first embodiment described above, with reference to Figures 12 to 19B.

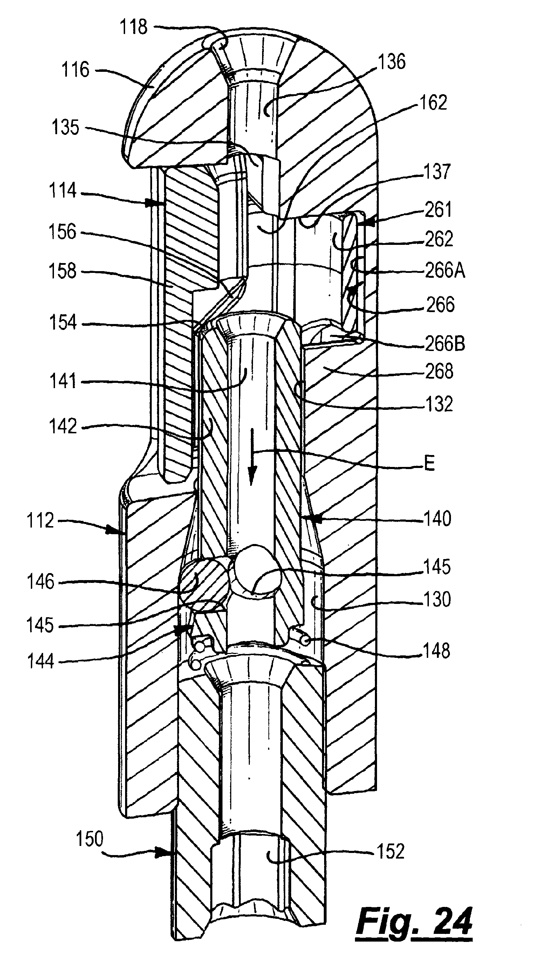

The provision of the curved wall formation 262 provides the advantage in the second embodiment that the curved wall formation 262 and the wall members 162 hold the carriage 140 in the most appropriate position to enable the co-operating surfaces 156 to engage the release surface 154, thereby urging the carriage 140 in the direction of the arrow E in Figure 24.

## Claims

1. A clamping assembly comprising a body (112) defining a path (122) to receive an elongate article (124) lengthwise therethrough, a clamping arrangement (138) in the body, the clamping arrangement being arrangeable in a clamping condition to clamp the elongate article, and the clamping assembly further including a release arrangement (114) on the body, wherein the release arrangement is moveable in a direction transverse to the path to release the clamping arrangement from the clamping condition, wherein the clamping arrangement comprises a carriage (140) held within the body and a clamping member (146) carried by the carriage, the carriage including a release portion (142) co-operable with the release arrangement, and wherein the release arrangement comprises a main part (158) and an engaging element (160) configured to cooperate with the clamping arrangement, **characterised in that** the release portion comprises a chamfered release surface (154), and the engaging element has a co-operating surface (156) to co-operate with the release surface on the carriage, the co-operating surface being disposed at a corresponding angle to the chamfered release surface.

2. A clamping assembly according to Claim 1, wherein when the clamping arrangement (138) is released from the clamping condition, the clamping arrangement can move to a non-clamping condition.

3. A clamping assembly according to Claim 1 or 2, wherein the release arrangement (114) is movable transverse to the path from a non-release condition to a release condition to release the clamping arrangement from the clamping condition.

4. A clamping assembly according to Claim 1, 2 or 3, wherein the clamping arrangement (138) includes a plurality of further clamping members (146) in addition to the aforesaid clamping member, each clamping member being moveable between the clamping and the non-clamping conditions.

5. A clamping assembly according to Claim 4, wherein each clamping member (146) is carried by the carriage (140), the carriage defining a bore (141) to receive the elongate article (124) therethrough, wherein the carriage is arranged within the path in the body, and the bore extends along the path and is coaxial with the path, wherein the carriage has a holding portion (144) to hold the, or each, clamping member, the holding portion including at least one holding formation (145) to hold the, or each, clamping member, and wherein the body has a force applying formation to move the, or each, clamping member into engagement with the elongate article.

6. A clamping assembly according to Claim 5, wherein the force applying formation comprises a cam formation (134) to move the, or each, clamping member into engagement with the elongate article.

7. A clamping assembly according to Claim 5 or 6, wherein the force applying formation comprises a tapered region of the body, wherein the carriage (140) has a flared portion which is flared in correspondence with the tapered region of the body, the flared portion comprising the holding portion (144), and wherein the force applying formation extends around the path.

8. A clamping assembly according to Claim 5, 6 or 7, wherein the, or each, holding formation is an aperture (145) defined in the carriage, and the, or each, clamping member comprises a spherical member (146).

9. A clamping assembly according to any preceding Claim, wherein the clamping arrangement further includes urging means (148) to urge the clamping arrangement to the clamping condition, the urging means being operable on the carriage to urge the carriage to the clamping position.

10. A clamping assembly according to any preceding Claim, wherein the carriage is moveable between a clamping position, in which the, or each, clamping member can engage the article, and a non-clamping position, in which the, or each, clamping member is released from the article, and wherein when the carriage moves from the non-clamping position to the clamping position, the force applying formation pushes the, or each, clamping member into the clamping condition.

11. A clamping assembly according to any preceding Claim, wherein the release portion comprises a tubular member (142), and the release surface (154) is provided on the tubular member at an end of thereof.

12. A clamping assembly according to any preceding Claim, wherein the release arrangement comprises two engaging elements (160), a respective co-operating surface (156) being provided on each engaging element, wherein when the release arrangement (114) is moved from the non-release condition to the release condition, the co-operating surface engages and slides over the release surface on the carriage, thereby moving the carriage (140) from the clamping position to the non-clamping position, wherein the release surface and the co-operating surface are in the form of corresponding cam surfaces to effect the aforesaid movement of the carriage when the co-operating surface on the release arrangement slides over the release surface on the carriage, and wherein each, engaging element comprises a release projection (160) extending from the main part, and the co-operating surface is provided on the release projection.

13. A clamping assembly according to any preceding Claim, wherein the release arrangement includes wall members (162), which extend opposite each other around the carriage.

14. A clamping assembly according to Claim 13, wherein the release arrangement includes a collar (261) extending around the carriage, the collar comprising a curved wall formation (262) and the wall members (162), the curved wall formation extending between the wall members to connect the wall members to each other.

15. A clamping assembly according to Claim 14, wherein the body defines a main recess (121) to receive the release arrangement, and the body further defines a front aperture (121) to allow the release arrangement (114) to be received in the main recess, wherein the body defines a subsidiary recess (266) extending from the main recess, the subsidiary recess being configured to receive the collar.

## Patentansprüche

1. Klemmanordnung, die Folgendes umfasst: einen Körper (112), der einen Pfad (122) festlegt, um einen länglichen Gegenstand (124) längs durch sich hindurch aufzunehmen, eine Klemmvorrichtung (138) in dem Körper, wobei die Klemmvorrichtung in einem Klemmzustand angeordnet werden kann, um den länglichen Gegenstand einzuklemmen und wobei die Klemmanordnung zusätzlich eine Freigabevorrichtung (114) an dem Körper umfasst, wobei die Freigabevorrichtung in einer Richtung diagonal zu dem Pfad bewegt werden kann, um die Klemmvorrichtung aus dem Klemmzustand freizugeben, wobei die Klemmvorrichtung einen Schlitten (140), der in dem Körper gehalten wird und ein Klemmelement (146) umfasst, das von dem Schlitten getragen wird, wobei der Schlitten einen Freigabeabschnitt (142) umfasst, der mit der Freigabevorrichtung betätigt werden kann und wobei die Freigabevorrichtung einen Hauptteil (158) und ein Eingriffselement (160) umfasst, das so konfiguriert ist, dass es mit der Klemmvorrichtung zusammenwirkt, dadurch charakterisiert, dass der Freigabeabschnitt eine abgeschrägte Freigabefläche (154) umfasst und das Eingriffselement weist eine zusammenwirkende Fläche (156) auf, die mit der Freigabefläche auf dem Schlitten zusammenwirkt, wobei die zusammenwirkende Fläche in einem zugehörigen Winkel zur abgeschrägten Freigabefläche angeordnet ist.

2. Klemmanordnung nach Anspruch 1, wobei sich die Klemmvorrichtung, wenn die Klemmvorrichtung (138) aus dem Klemmzustand freigegeben wird, in einen nicht klemmenden Zustand bewegen kann.

3. Klemmanordnung nach Anspruch 1 oder 2, wobei die Freigabevorrichtung (114) diagonal zu dem Pfad von einem nicht klemmenden Zustand in einen Freigabezustand bewegt werden kann, um die Klemmvorrichtung aus dem Klemmzustand freizugeben.

4. Klemmanordnung nach Anspruch 1, 2 oder 3, wobei die Klemmvorrichtung (138) zusätzlich zu dem zuvor genannten Klemmelement eine Vielzahl zusätzlicher Klemmelemente (146) umfasst, wobei jedes Klemmelement zwischen den Klemm- und den nicht klemmenden Zuständen bewegt werden kann.

5. Klemmanordnung nach Anspruch 4, wobei jedes Klemmelement (146) von dem Schlitten (140) getragen wird, wobei der Schlitten eine Bohrung (141) festlegt, um den länglichen Gegenstand (124) dort hindurch aufzunehmen, wobei der Schlitten innerhalb des Pfads in dem Körper angeordnet ist und die Bohrung dehnt sich entlang des Pfads aus und ist mit dem Pfad koaxial, wobei der Schlitten einen Halteabschnitt (144) aufweist, um das oder jedes Klemmelement zu halten, wobei der Halteabschnitt mindestens eine Halteausbildung (145) umfasst, um das oder jedes Klemmelement zu halten und wobei der Körper eine Ausbildung zum Anlegen einer Kraft aufweist, um das oder jedes Klemmelement zum Eingriff mit dem länglichen Gegenstand zu bewegen.

6. Klemmanordnung nach Anspruch 5, wobei die Ausbildung zum Anlegen einer Kraft eine Nockenausbildung (134) umfasst, um das oder jedes Klemmelement zum Eingriff mit dem länglichen Gegenstand zu bewegen.

7. Klemmanordnung nach Anspruch 5 oder 6, wobei die Ausbildung zum Anlegen einer Kraft einen verjüngten Bereich des Körpers umfasst, wobei der Schlitten (140) einen erweiterten Abschnitt aufweist, welcher entsprechend dem verjüngten Bereich des Körpers erweitert ist, wobei der erweiterte Abschnitt den Halteabschnitt (144) umfasst und wobei sich die Ausbildung zum Anlegen einer Kraft um den Pfad ausdehnt.

8. Klemmanordnung nach Anspruch 5, 6 oder 7, wobei die oder jede Halteausbildung eine Öffnung (145) ist, die in dem Schlitten festgelegt wird und das oder jedes Klemmelement umfasst ein kugelförmiges Element (146).

9. Klemmanordnung nach einem beliebigen der vorhergehenden Ansprüche, wobei die Klemmvorrichtung zusätzlich ein Drückmittel (148) zum Drücken der Klemmvorrichtung in den Klemmzustand umfasst, wobei das Drückmittel auf dem Schlitten betätigt werden kann, um den Schlitten in die Klemmposition zu drücken.

10. Klemmanordnung nach einem beliebigen der vorhergehenden Ansprüche, wobei der Schlitten zwischen einer Klemmposition, in welcher das oder jedes Klemmelement mit dem Gegenstand im Eingriff stehen kann und einer nicht klemmenden Position, in welcher das oder jedes Klemmelement von dem Gegenstand freigegeben wird, bewegt werden kann und wobei die Ausbildung zum Anlegen einer Kraft, wenn sich der Schlitten von der nicht klemmenden Position in die Klemmposition bewegt, das oder jedes Klemmelement in den Klemmzustand schiebt.

11. Klemmanordnung nach einem beliebigen der vorhergehenden Ansprüche, wobei der Freigabeabschnitt ein rohrförmiges Element (142) umfasst und die Freigabefläche (154) wird an dem rohrförmigen Element an einem Ende davon bereitgestellt.

12. Klemmanordnung nach einem beliebigen der vorhergehenden Ansprüche, wobei die Freigabevorrichtung zwei Eingriffselemente (160) umfasst, wobei eine jeweilige zusammenwirkende Fläche (156) an jedem Eingriffselement bereitgestellt wird, wobei die zusammenwirkende Fläche, wenn die Freigabevorrichtung (114) von dem nicht freigebenden Zustand in den Freigabezustand bewegt wird, in die Freigabefläche an dem Schlitten eingreift und über diese gleitet, wodurch der Schlitten (140) von der Klemmposition in die nicht klemmende Position bewegt wird, wobei die Freigabefläche und die zusammenwirkende Fläche die Form zugehöriger Nockenflächen aufweisen, um die zuvor genannte Bewegung des Schlittens zu bewirken, wenn die zusammenwirkende Fläche an der Freigabevorrichtung über die Freigabefläche an dem Schlitten gleitet und wobei jedes Eingriffselement einen Freigabevorsprung (160) umfasst, der sich von dem Hauptteil ausdehnt und die zusammenwirkende Fläche wird an dem Freigabevorsprung bereitgestellt.

13. Klemmanordnung nach einem beliebigen der vorhergehenden Ansprüche, wobei die Freigabevorrichtung Wandelemente (162) umfasst, die sich gegenüber voneinander um den Schlitten ausdehnen.

14. Klemmanordnung nach Anspruch 13, wobei die Freigabevorrichtung einen Bund (261) umfasst, der sich um den Schlitten ausdehnt, wobei der Bund eine geschwungene Wandausbildung (262) und die Wandelemente (162) umfasst, wobei sich die geschwungene Wandausbildung zwischen den Wandelementen ausdehnt, um die Wandelemente miteinander zu verbinden.

15. Klemmanordnung nach Anspruch 14, wobei der Körper eine Hauptausnehmung (121) festlegt, um die Freigabevorrichtung aufzunehmen und wobei der Körper zusätzlich eine vordere Öffnung (121) festlegt, damit die Freigabevorrichtung (114) in der Hauptausnehmung aufgenommen werden kann, wobei der Körper eine Nebenausnehmung (266) festlegt, die sich von der Hauptausnehmung ausdehnt, wobei die Nebenausnehmung so konfiguriert ist, dass sie den Bund aufnimmt.

## Revendications

1. Un ensemble de serrage comprenant un corps (112) définissant un chemin (122) pour la réception d'un article allongé (124) le traversant dans sa longueur, un dispositif de serrage (138) dans le corps, la configuration de serrage (138) pouvant être disposée, dans un état de serrage, pour serrer l'article allongé, et le dispositif de serrage comprenant en outre un dispositif de déblocage (114) sur le corps, le dispositif de déblocage pouvant être déplacé dans une direction transversale au chemin pour débloquer la configuration de serrage de l'application de serrage, le dispositif de serrage comprenant un chariot (140), maintenu au sein du corps, et un élément de serrage (146) porté par le chariot, le chariot comprenant une partie de déblocage (142) coopérant avec le dispositif de déblocage, et le dispositif de déblocage comprenant une pièce principale (158) et un élément d'engagement (160) configuré pour coopérer avec le dispositif de serrage, **caractérisé par le fait que** la partie de déblocage comprend une surface de déblocage chanfreinée (154), et l'élément d'engagement possédant une surface de coopération (156) coopérant avec la surface de déblocage sur le chariot, la surface de coopération étant disposée à un angle correspondant relativement à la surface de déblocage chanfreinée.

2. Un ensemble de serrage selon la revendication 1, la configuration de serrage (138) étant débloquée de l'état de serrage, la configuration de serrage pouvant se déplacer vers une configuration autre de non serrage.

3. Un ensemble de serrage selon la revendication 1 ou 2, le dispositif de déblocage (114) pouvant être déplacé transversalement au chemin, d'un état de non déblocage à un état de déblocage, afin de débloquer le dispositif de serrage de l'état de serrage.

4. Un ensemble de serrage selon la revendication 1, 2 ou 3, la configuration de serrage (138) comprenant une série d'autres éléments de serrage (146) en plus de l'élément de serrage susmentionné, chaque élément de serrage pouvant être déplacé entre l'état de serrage et les états de non serrage.

5. Un ensemble de serrage selon la revendication 4, chaque élément de serrage (146) étant porté par le chariot (140), le chariot définissant un alésage (141) pour la réception de l'article allongé (124) le traversant, le chariot étant disposé au sein du chemin dans le corps, et l'alésage s'étendant le long du chemin et étant coaxial à celui-ci, le chariot possédant une partie de maintien (144) assurant le maintien de l'élément de serrage, ou de chaque élément de serrage, y compris au moins une formation de maintien (145) maintenant le ou chaque élément de serrage, et le corps possédant une formation d'application de la force pouvant déplacer le ou chaque élément de serrage afin de l'engager avec l'article allongé.

6. Un ensemble de serrage selon la revendication 5, la formation d'application de la force comprenant un ensemble à came (134) permettant de déplacer l'élément de serrage, ou chaque élément de serrage pour l'engager avec l'article allongé.

7. Un ensemble de serrage selon la revendication 5 ou 6, la formation d'application de la force comprenant une zone conique du corps, le chariot (140) possédant une partie évasée en correspondance avec la zone conique du corps, la partie évasée comprenant la partie de maintien (144), et la formation d'application de la force s'étendant autour du chemin.

8. Un ensemble de serrage selon la revendication 5, 6 ou 7, dans lequel la ou chaque formation de maintien est une ouverture (145) définie dans le chariot, et le ou chaque élément de serrage comprend un élément sphérique (146).

9. Un ensemble de serrage selon une quelconque des revendications précédentes, dans lequel le dispositif de serrage comprend en outre des dispositifs de sollicitation (148) sollicitant le dispositif de serrage dans la configuration de serrage, le dispositif de sollicitation pouvant être actionné sur le chariot pour solliciter le chariot dans la position de serrage.

10. Un ensemble de serrage selon une quelconque des revendications précédentes, dans lequel le chariot peur être déplacé entre une position de serrage, dans laquelle le ou chaque élément de serrage peut s'engager avec l'article, et une position de non serrage, dans laquelle le ou chaque élément de serrage est dégagé de l'article, le chariot se déplaçant de la position de non serrage à la position de serrage, la formation d'application de la force poussant le ou chaque élément de serrage dans la position de serrage.

11. Un ensemble de serrage selon une quelconque des revendications précédentes, dans lequel la partie de déblocage comprend un élément tubulaire (142) et la surface de déblocage (154) est placée sur l'élément tubulaire, à un bout de celui-ci.

12. Un ensemble de serrage selon une quelconque des revendications précédentes, dans lequel le dispositif de déblocage comprend deux éléments d'engagement (160), une surface de coopération (156) correspondante étant prévue sur chaque élément d'engagement, le dispositif de déblocage (114) étant déplacé de l'état de non serrage à l'état de serrage, la surface de coopération s'engageant et coulissant sur la surface de déblocage sur le chariot, en déplaçant ainsi le chariot (140) de la position de serrage à la position de non serrage, la surface de déblocage et la surface de coopération se présentant sous forme de surfaces à came correspondantes de façon à effectuer ledit déplacement du chariot lorsque la surface de coopération sur le dispositif de déblocage coulisse sur la surface de déblocage sur le chariot, et chaque élément d'engagement comprenant une saillie de déblocage (160) s'étendant de la pièce principale, et la surface de coopération étant placée sur la saillie de déblocage.

13. Un ensemble de serrage selon une quelconque des revendications précédentes, dans lequel le dispositif de déblocage comprend des éléments à paroi (162), s'étendant l'un en face de l'autre autour du chariot.

14. Un ensemble de serrage selon la revendication 13, dans lequel le dispositif de déblocage comprend un collier (261) s'étendant autour du chariot, le collier comprenant une formation à paroi courbe (262) et les éléments à paroi (162), la formation à paroi courbe s'étendant entre les éléments à paroi pour raccorder les éléments à paroi entre eux.

15. Un ensemble de serrage selon la revendication 14, dans lequel le corps définit un évidement principal (121) où se place le dispositif de déblocage, le corps définissant en outre une ouverture antérieure (121) permettant au dispositif de déblocage (114) de se placer dans l'évidement principal, le corps définissant un évidement subsidiaire (266) s'étendant de l'évidement principal, et l'évidement subsidiaire étant configuré pour recevoir le collier.
